# EUROPEAN PATENT APPLICATION

(11) **EP 1 158 388 A2**
(43) Date of publication of application: **28.11.2001**
(21) Application number: 01304550.5
(22) Date of filing: 23.05.2001
(51) Int. Cl.: G06F 1/00

(54) **Software program storage medium, software program rights management system and management method for software program rights**

(30) Priority: 25.05.2000 JP 2000154989
(71) Applicant: SONY CORPORATION, Tokyo (JP)
(72) Inventor: Ueda, Satoru, Shinagawa-ku, Tokyo (JP)
(74) Representative: Nicholls, Michael John

(57) **Abstract**

A software program rights management system for managing an assignment history of rights to use a software program stored in a software program storage medium is proposed. As a storage medium for supplying a software program, a write-once storage medium or a storage medium having a read-only storage portion for storing a software program and a write-once portion is used, and a user's access authorization data is recorded in a portion of the write-once portion of such storage medium or in the write-once portion of such software program storage medium.

## Description

The present invention relates to a software program storage medium, a software program rights management system and a management method for software program rights and, more particularly, relates to the software program storage medium, the software program rights management system and the management method for software program rights that can manage rights to access or use a software program.

There is no methodology established so far as to how to establish appropriate management over an assignment matter when a person wishes to assign his/her rights to access a software program to another person.

As a consequence, the person who assigned the rights to access such software program should in principle be legally entitled to receive a compensation corresponding to the rights to access the software program. However, in reality it has been difficult to collect such compensation or payment.

From the point of view of a rights holder, this problem has been a remarkable obstacle for the development of the software industry since it has created a situation in which an unlimited and unfair use of a software program was largely permitted.

Such situation is also unfavorable for the software program user, as it creates a remarkably unfair situation between a person who received the rights to access the software upon a proper payment of an established fee as compared to a person who illegally acquired access to the software.

In addition, such situation resulted as an incentive for improper use of software programs and it is in effect an invitation to moral degradation.

As mentioned above, there is no conventional method for adequately managing an assignment history of rights to access a software program and, as a result, the lack of rules for protection causes an abusive illegal use of the software program, thus causing a so-called moral hazard against the rights to access the software program. Such problem, as mentioned above, has been an obstacle for the development of the software industry.

It is an object of the present invention to solve the problems mentioned above with a comparatively simple structure, allowing implementation of a software program storage medium for managing an assignment history of rights to access a software program, a software program rights management system for managing an assignment history of rights to access a software program stored in a software program storage medium and a management method for software program rights.

In order to attain the object mentioned above, one preferred embodiment of the present invention provides a software program storage medium storing a software program provided to a user, in which user access authorization data is stored in a portion of a write-once storage medium or in a write-once portion of a storage medium having both a read-only storage portion for storing the software program and a write-once portion.

As a result, because the software program storage medium storing a software program to be provided to a user stores access authorization data, it is possible to adequately manage the assignment history of the rights to access the software program.

According to another preferred embodiment of the present invention, a software program rights management system managing rights to access a software program provided to a user is provided, the software program access rights management system having an access authorization issuing means for issuing user access authorization data, a storage management means for storing and managing the access authorization data, and a data communication means for binding the access authorization issuing means to the storage management means.

As a result, because the storage management means of the management system storing user access authorization data also stores the user access authorization data, the assignment history of the rights to access the software program can be managed properly.

Still, according to another preferred embodiment of the present invention, a management method for software program rights for managing rights to access a software program provided to a user is provided, such management method for software program access rights characterized by managing a software program storage medium storing a software program to be provided to a user and having a write-once portion that stores user access authorization data.

As a result, because the software program storage medium storing the software program provided to the user stores the user access authorization data, an assignment history of the rights to access the software program can be managed adequately.

By means of recording a user access authorization data in the storage medium storing a software program, the software program itself can manage access authorization, and an assignment history of the rights to access the software program can be managed easily and adequately.

Through the user access authorization data, authorized users can limited, so that payment of fees for accessing the software program can be managed from compensation disbursement data, so that the use of the software program can be managed properly.

Through the software program access rights management system according to an preferred embodiment of the present invention, the issuing of access authorization and the user access authorization data can be managed simultaneously, thus a software program rights management system that can adequately manage an assignment history of the rights to access a software program can be realized.

Still, by having a storage management means storing a software program to be provided to a user and a software program storage medium having a portion for storing the user access authorization data, an assignment history of the rights to access the software program can be adequately managed in an easy fashion and at low cost by means of the software program storage medium itself.

In addition, by having a database apparatus storing a user access authorization data, an assignment history of the rights to access the software program can be managed easily and safely by using both the software program storage medium itself and the database.

By having the user access authorization data including information for identifying the user and the user's environment, as well as information on payment of fees, it is possible to restrict a user through the user information, to manage payment of fees from the fee payment information, thus the use of the software program can be managed appropriately.

Also, according to another preferred embodiment of the present invention including a management method for software program rights controlling the rights to access a software program, by recording a user access authorization data in a storage medium storing the software program, the software program itself can manage access authorization by means of the access authorization data, thus the management method for software program rights, which can easily and adequately manage an assignment history of the rights to access the software program can be realized.

Furthermore, according to another preferred embodiment of the present invention, the user access authorization data is stored in a database along with a write-once portion of the software program storage medium, so that a management method for software program rights can be realized, in which both the software program storage medium and the database are used, thus an assignment history of the rights to access a software program can be easily and adequately managed.

Still, according to another preferred embodiment of the present invention, the user access authorization data includes user information for identifying a user and a user's environment, as well as information related to payment of fees to a rights holder.

As a result, a management method for software program rights that can control use of a software program in an appropriate and easily fashion can be realized by restricting a user through user information and controlling payment of fees.

The present invention will be further described by way of example with reference to the accompanying drawings, in which:
FIG. 1 is a flowchart showing a process for fabricating a software program providing medium according to a preferred embodiment of the present invention;
FIG. 2 is a flowchart showing a procedure adopted for starting access to a software program, according to a preferred embodiment of the present invention;
FIG. 3 is a flowchart showing a procedure adopted for starting access to a software program, according to a preferred embodiment of the present invention, for a case in which a software program rights holder does not demand registration of user information;
FIG. 4 is a flowchart showing a procedure for cancellation of access to a software program, according to a preferred embodiment of the present invention;
FIG. 5 is a flowchart showing a method for generation of a medium that enables use of a software program under another user environment, according to a preferred embodiment of the present invention; and
FIG. 6 is a block diagram showing a structure of a software program rights management system according to a preferred embodiment of the present invention.

A management method for software program rights according to a preferred embodiment of the present invention is described first, with reference to the accompanying drawings.

At first, a write-once software program providing medium is prepared, such as for example, a CD-R (Compact Disc [a trademark] - Recordable) or a composition including a CD-ROM (Compact Disc - Read Only Memory) and a CD-R, or a DVD-R (Digital Versatile Disc - Recordable) or a composition including a DVD-ROM (Digital Versatile Disc - Read Only Memory) and a DVD-R (Digital Versatile Disc - Recordable) and/or a CD-R in a disc. Such a disc is disclosed, for example, as a CD-PROM (a trademark of Eastman Kodak Co.). Here, CD-R means a write-once CD-ROM and DVD-R is a write-once DVD-ROM. These media can include a medium of a different type from the above, such as a magneto-optical disc, for example, a semiconductor memory module or the like, having a similar function thereof.

Next, an issuing apparatus for relating the user's software program license to a user environment identification code, as well as a database apparatus (license database) for establishing a relation between the issued license and the user and a user environment, are prepared. Such database apparatus also permits recording of a notice of undefinition when a user having rights to access the software program is undefined.

In addition, an issuing apparatus, a means for accessing the database apparatus are prepared. As an example of such case, an application for a remote telecommunication such as the Internet can be mentioned.

Such access means can be installed in a personal computer at a disposition of the user. Conversely, the access means may be even a terminal apparatus installed within a software program dealer that mediates the rights to use a software program that a user has licensed.

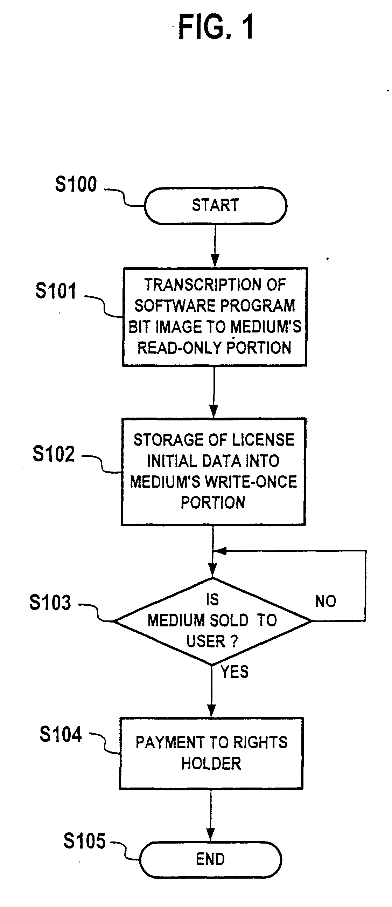

Next, a fabricating process for a software program providing medium is described with reference to a flowchart of FIG. 1. After this flow starting at step 100, a bit image of a software program is copied to a ROM area of the providing medium, in step 101. This can be realized, for example, in a case of a CD-ROM, by an apparatus related to the successive fabricating process of the CD-ROM.

Then, at step 102, initial information regarding user license is stored in a write-once area in such software program providing medium. As a result of recording this information in the write-once area of the software program providing medium, it is possible to establish a unified management over the software program providing medium and its accompanying status of licensing. Such a medium is already realized in a CD-PROM (a trademark of Eastman Kodak).

Possible information or messages to be recorded in this case are "user: undefined", "payment to rights holder: completed".

The reason for writing whether payment of a software program access fee is completed is that, in general, selling of a software program medium implies collection of a determined amount as a compensation fee, and such operation should be done without overdue payment.

However, if it is not possible to affirm such information, then it is also possible to write a message such as "payment to rights holder: pending".

In a general circumstance, when a medium is sold in step 103, a fee is paid to the rights holder, in step 104.

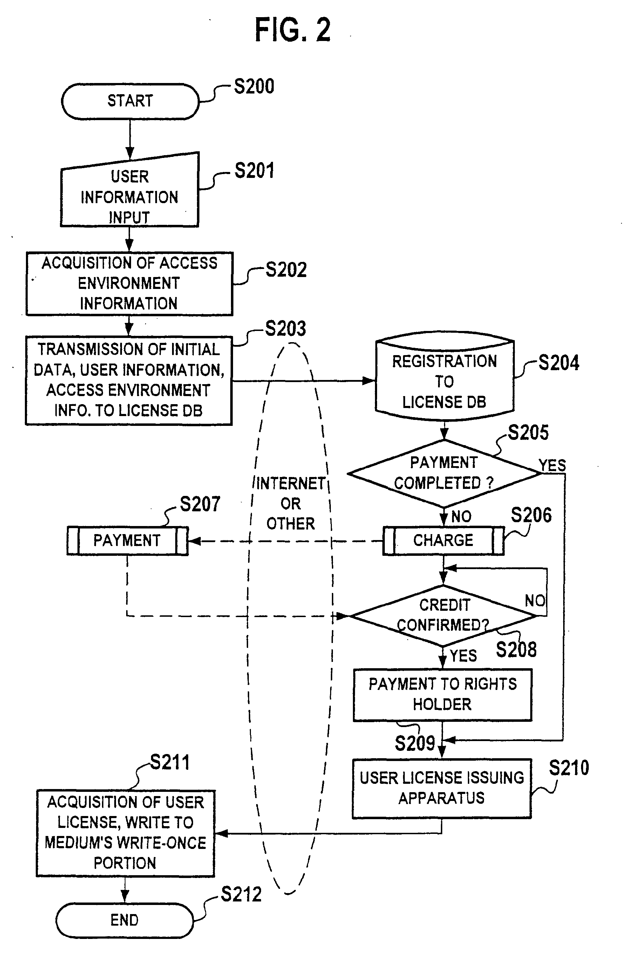

A procedure for a user to start accessing a software program is described in the following. A case in which a software program holder requests registration of user information is described first. This process is shown in a flowchart of FIG. 2.

When such flow starts at step 200, a user inputs user information in a terminal in step 201. Then, an apparatus that transmits information to a license database collects software program access environment information, in step 202. In this case, for example an OS (Operating System) license number, a network address code or the like can be used.

Then, information collected in step 203 is sent to the license database and stored into the license database in step 204. It is conceivable that Internet is utilized in the exchange of such information.

The license management business operator that received the required information in steps 203 and 204 checks whether the fee concerning a new user access to a software program attached in the medium has been paid to the rights holder, in step 205.

This can be verified in a record in the license database or recorded information within a write-once portion of the medium.

If there is not payment registered in step 205, payment of the fee is requested in step 206 and awaits confirmation of payment, in step 208. If credit is confirmed in step 207, then payment to rights holder is done in step 209. It is conceivable that the license management business operator receives a constant commission from the rights holder or the user.

If the payment of fee is confirmed in step 208, then the license management business operator generates a message in step 210, conveying a message such as "user authorization confirmed (user information, user environment information", "payment to rights holder: completed". Then, the message is sent to the user in step 211, such information is recorded to in the write-once portion of the medium and, as a result, the software program is set available for access in step 212.

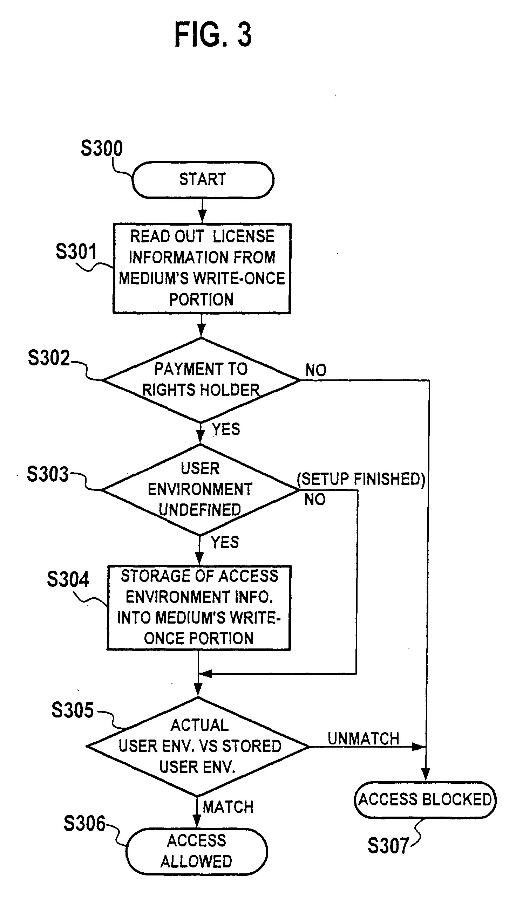

Next, a case in which a software program user does not pursue registration of user information during a procedure for starting access to the software program is described with reference to a flowchart of FIG. 3.

When such flow starts at step 300, a software program provided by the medium in step 301 reads out the write-once portion of the medium and, in step 302 verifies whether an adequate amount is paid against the rights holder. If a record containing a message such as "payment to rights holder: pending" is detected, then access is blocked.

In sequence, the software program provided by the medium verifies whether there is any information such as "user undefined" is recorded in the medium. If a message like "user undefined" is found, user environment information is stored in the write-once portion of the medium, in step 304, and a message like "user: defined (environment information)" is recorded.

As for the software program supplied in step 305 by the medium, a user checks whether the access environment in which the user is trying to access the software program matches the access environment that is actually recorded in the medium. If there is matching, then the software program access is enabled in step 306. Otherwise, if no match is found, access to the software program is blocked in step 307.

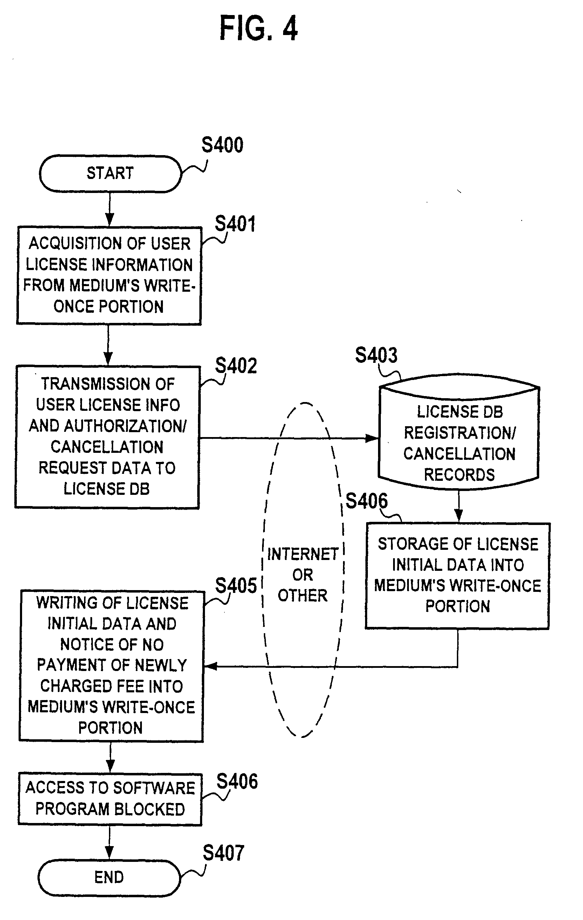

Furthermore, a procedure for cancellation of rights to use a software program is described below. At first, a case in which a user having rights to use the software program pursues registration of user information is described using a flow chart of FIG. 4 is described.

When such flow starts at step 400, a user license information recorded in the medium is read out in step 401, and, in step 402, information on cancellation of rights to use the software program is sent to the license database along with information on confirmation of payment of the access fee. In sequence, the license management business operator proceeds to a registration of an cancellation record into the license database, in step 403, and then, a message like "user: undefined", "payment to rights holder: pending" is generated and sent to an apparatus at the user's side, in step 404. The apparatus at the user side records the subject matter that has been sent to the medium, in step 405. Finally, access to the software program is blocked, in step 406.

Next, a case in which a user having rights to access the software program does not pursue registration of user information during the procedure for cancellation of access rights to the software program is described below.

In such case, access to the software program can be cancelled by simply leaving the software program access environment that is recorded in the medium when the access to the software program is started.

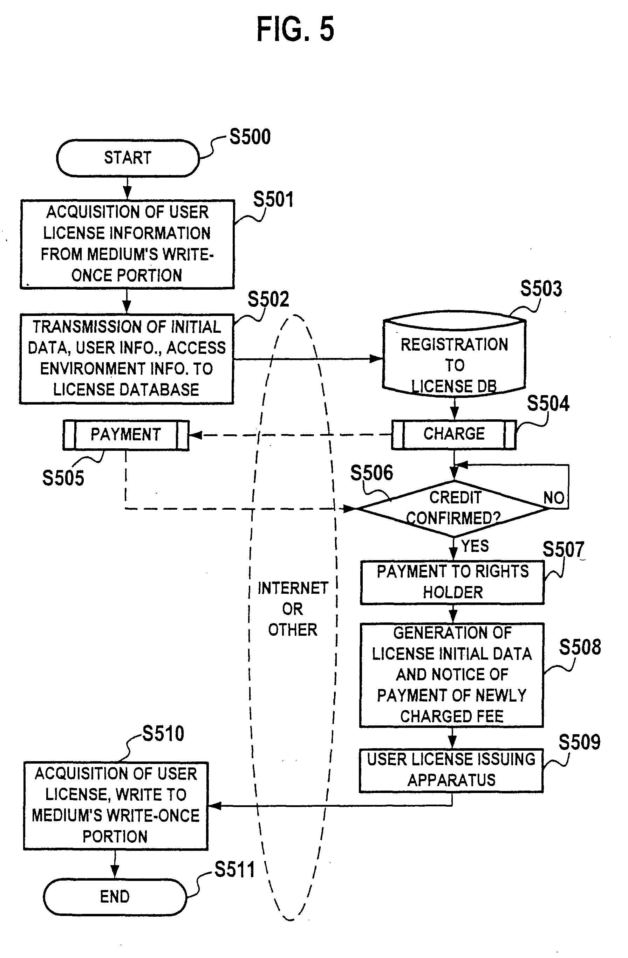

Next, a method for generation of a medium enabling the use of a licensed software program in another user environment is described with reference to a flow chart of FIG. 5. This is done by a software program dealer that mediates a trade-in software program.

When such flow starts at step 500, through the software program dealer's terminal, license information recorded in the medium is read out, in step 501 and, transmitted to the license management business operator's database, in step 502. Concurrently, the software program dealer sends to the license database data requesting payment of fees against the software program user having the rights to access the software program.

In step 503, the license management business operator records the license information, in step 504, charges to the software program dealer and, the software program dealer pays the requested fee in step 505.

When the license management business operator confirms that payment is completed, in step 506, the license management business operator, in step 507, performs payment to the software program rights holder, generates license information such as "user: undefined", "payment to rights holder: complete", in step 508, and sends it to a software program dealer's license information registration apparatus, in step 509.

As a result, the software program dealer's license information registration apparatus records license information such as the above mentioned "user: undefined", "payment to rights holder: complete", in step 501, thus the medium can be used in a new user environment.

The license information recorded in the medium and the license information that the license management business operator exchanges from an external environment can be sent after ciphered by appropriate means through an appropriate means.

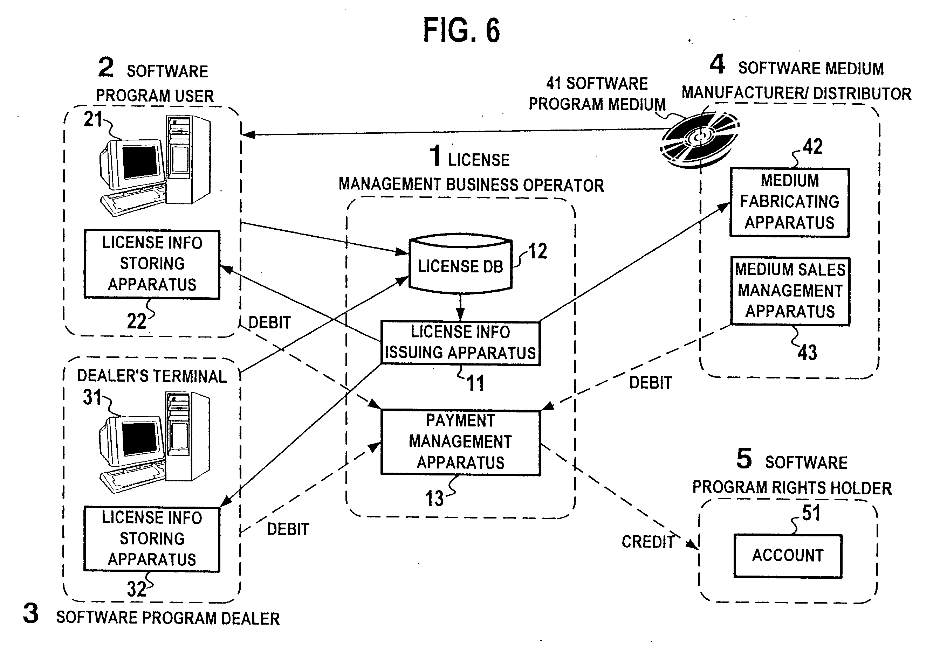

FIG. 6 is a block diagram that shows a construction of software program rights management system according to a preferred embodiment of the present invention. In FIG. 6, block 1 represents a license management business operator, block 2 represents a software program user, block 3 represents a software program dealer, block 4 represents a software program medium manufacturer and/or distributor and code 5 represents a software program rights holder. In addition, block 11 represents a license information issuing apparatus, block 12 represents a license database, block 13 represents a payment (account) management apparatus, block 21 represents a user terminal, block 22 represents a license information storing apparatus, block 31 represents a dealer's terminal, block 32 represents a license information storing apparatus, block 41 represents a software program medium, block 42 represents a software program medium fabricating apparatus, block 43 represents a medium sales management apparatus and block 51 represents a software program rights holder's account.

In addition, a full line in the diagram expresses a software program medium marketing route as well as data communication for the software program medium 41, while a dotted line shows an account operation of credit and/or debit.

Since a brief description of an operation of the system is included in the subject matter already described as a description of the management method for software program access rights, a new description will be omitted here.

Although the description of the preferred embodiment of the present invention has been made focused on a software program rights management system and a management method for software program rights, the present invention also applies to a software program providing medium having a write-once portion recording user access authorization data, already mentioned in the description above.

Finally, the configurations and structures of respective units and portions described specifically with respect to the preferred embodiments of the present invention are only examples of realization of the present invention, so the embodiments thereof should not be construed as to limiting the technical scope of the present invention.

## Claims

1. A software program storage medium for storing a software program provided to a user, wherein
said storage medium comprises a recordable portion, and
a user's access authorization data is recorded in said recordable portion of said storage medium.

2. The software program storage medium according to claim 1, wherein said storage medium further comprises a read-only portion for storing said software program.

3. The software program storage medium according to claim 1 or 2, wherein said user's access authorization data comprises user information for specifying said user and said user's access environment, and payment information related to payment of fees to a rights holder.

4. The software program storage medium according to claim 1, 2 or 3 wherein
said recordable portion comprises a write-once portion, and
said user's access authorization data is recorded in said write-once portion of said storage medium.

5. A software program rights management system for managing rights to access a software program provided to a user, comprising
an access authorization issuing means for issuing a user's access authorization data;
a storage management means for storing said user's access authorization data; and
a data communication means for binding said access authorization issuing means with said storage management means.

6. The software program rights management system according to claim 5, wherein said storage management means further comprises a software program storage medium including a recordable portion for storing a software program provided to a user and said user's access authorization data.

7. The software program rights management system according to claim 5 or 6, wherein said storage management means further comprises
a software program storage medium including a recordable portion for storing a software program provided to a user and said user's access authorization data; and
a database apparatus for storing said user's access authorization data.

8. The software program rights management system according to claim 5, 6 or 7 wherein said user's access authorization data includes user information for specifying a user and said user's access environment; and payment information related to payment of fees to a rights holder.

9. A management method for software program rights for managing rights to use a software program provided to a user, comprising the following steps of
storing a software program provided to a user; and
storing said user's access authorization data into a recordable portion of a software program storage medium having a recordable portion.

10. The method for software program access management according to claim 9, further comprising the step of storing a user's access authorization data into a database, along with said recordable portion of said software program storage medium.

11. The method for software program access management according to claim 9 or 10, wherein said user access authorization data includes user information for specifying a user and said user access environment and payment information related to payment of fees to a rights holder.
